## Europäisches Patentamt
## European Patent Office
## Office européen des brevets

(19)

(11) Publication number: **0 024 753**
**B1**

(12) **EUROPEAN PATENT SPECIFICATION**

(45) Date of publication of patent specification: **21.03.84**

(51) Int. Cl.³: **G 01 N 17/00**

(21) Application number: **80200723.7**

(22) Date of filing: **29.07.80**

(54) **Making and using corrosion measuring probes for fluid conveying conduits.**

(30) Priority: **27.08.79 US 70218**

(43) Date of publication of application:
**11.03.81 Bulletin 81/10**

(45) Publication of the grant of the patent:
**21.03.84 Bulletin 84/12**

(84) Designated Contracting States:
**DE FR GB IT NL**

(56) References cited:
**DE - A - 2 810 352**
**US - A - 2 878 354**
**US - A - 3 207 983**
**US - A - 3 504 323**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Olson, Eugene Edward**
**10603 Shady River**
**Houston Texas 77042 (US)**
Inventor: **Chiles, Edwin Tarleton**
**6627 Burning Tree**
**Houston Texas 77036 (US)**
Inventor: **Goolsby, Alvin Dale**
**9018, Weymouth Drive**
**Houston Texas 77031 (US)**

(74) Representative: **Puister, Antonius Tonnis, Mr. et al,**
**P.O. Box 302**
**NL-2501 CH The Hague (NL)**

Courier Press, Leamington Spa, England.

Making and using corrosion measuring probes for fluid conveying conduits

The present invention relates a method and apparatus for measuring the corrosion of a metallic conduit which is conveying or is surrounded by a corrosive fluid.

Known procedures for measuring corrosion, as for example described in U.S. patent 3,104,355 have utilized measurements of the electrical conductivity and/or resistance of samples or probes inserted within the corrosive medium. For example, a pair of relatively thick and thin corrodible metals connected as the legs of a balanced bridge circuit may be used. Since corrosion changes the resistance of the thin element more than that of the thick element, the rate of corrosion is proportionate to changes in the ratio of their resistances. However, such probes cannot be used in a simple way in a conduit.

It is therefore an object of the invention to provide a method and apparatus to measure corrosion of metallic conduits which are conveying or surrounded by a corrosive fluid in a simple and reliable manner.

The method of the invention is characterized by utilizing as a portion or section of the said conduit, a corrosion measuring conduit section, in which (a) in locations contacted by said corrosive fluid, both the composition and configuration of the metal in the measuring section are substantially the same as those predominating throughout said metallic conduit; and, (b) the thickness of the metal in one portion of the measuring section is thin relative to that in another portion; and (c) said relatively thick and thin portions of the measuring section are connected to means for employing them as the arms of an electrical resistance measuring bridge.

In an advantageous embodiment of the invention the corrosion measuring conduit section is obtained by making or modifying a section of the metallic conduit and the resultant made or modified section is connected to the metallic conduit to convey or be contacted by at least some of the corrosive fluid.

In another advantageous embodiment of the method of the invention is adapted to measure the rate of corrosion within the conduit when the conduit is conveying the corrosive fluid by including the further steps of measuring the ratio between the resistances of the relatively thick and thin wall portions at at least two known times.

The invention also comprises a corrosion measuring conduit section which, in use, is mechanically connected to a metallic fluid-confining conduit having a corrodible wall which is in contact with the corrosive fluid, characterized in that:

the corrosion measuring conduit section has (a) in locations contacted by said corrosive fluid, both the composition and configuration of metal substantially the same as those which predominate throughout said fluid-confining conduit; (b) two wall portions in which the thickness of the wall in one portion is thin relative to that in another portion; said relatively thick and thin wall portions of the conduit section containing further portions which, in use, receive means for electrically connecting said wall portions as the arms of an electrical resistance measuring bridge.

It can further be remarked, that U.S. patent 3,108,242 describes probes which have relatively large surface areas. Such probes may be coated with a protective material such as paint and used in similar resistance measurements to determine the protective capability of the coating. However numerous problems may be encountered due to a change in the size and shape of such probes. Further, U.S. patent 3,124,771 describes probes assemblies which can be supported within a fluid-conveying tube and used in similar measurements. Those probes are formed by mounting very thin shim stock on an electrical insulating material in order to obtain a probe which is mechanically strong but has a high sensitivity to corrosion.

The invention will now be described in more detail by way of example with reference to the accompanying drawings, in which:

Figure 1 schematically illustrates an embodiment of the probe of the invention;

Figure 2 is a block diagram of an example of an arrangement for testing a probe of the present type.

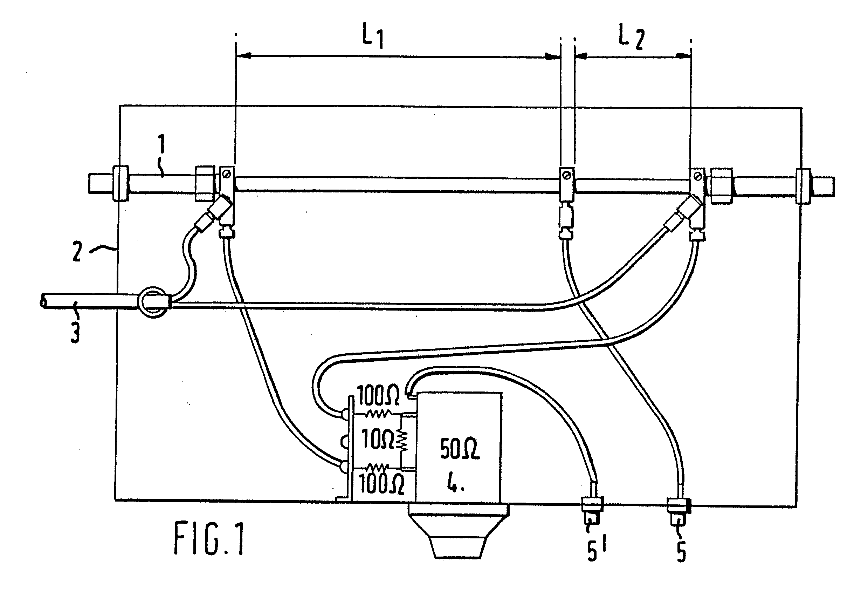

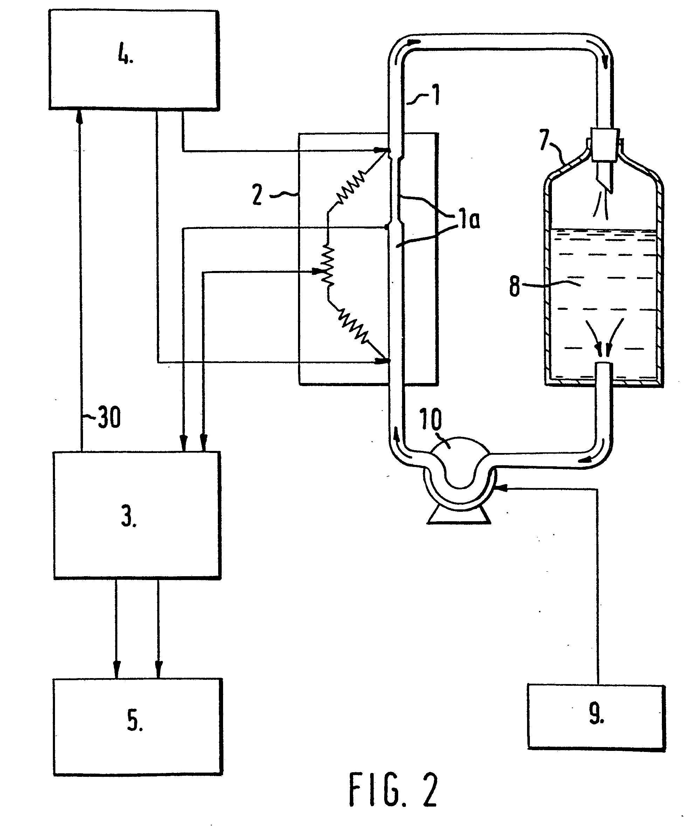

Figure 1 shows an example of an embodiment of a steel pipe corrosion measuring probe. A probe element of fluid-conveying conduit 1 comprises a section of tubing. The tubing wall comprises a relatively thick section (0.61 mm) over a certain length $L_1$ and a relatively thin section (0.25 mm) over a certain length $L_2$—In this example $L_1$ is 13 cm; $L_2$ is 5 cm. The tubing has a nominal 0.635 cm outer diameter by 0.06 cm· wall (0.061 cm wall as received (fabricated of C1018 steel (carbon content 0.15 to 0.20%, magnesium content 0.6 to 0.9%, phosphorous content maximum 0.04% and sulphur content maximum 0.05%). The tubing was used essentially as received except for the machining of its outer walls to provide the 0.061 cm (0.61 mm) and 0.025 cm (0.25 mm) relatively thick and thin sections. The tube was provided with suitable electrical connecting elements (not shown in detail) and mounted within an aluminium box 2. Said connecting elements connect the tubing 1 through fixed resistors to a 50 Ω slider 4. Further power was fed to the tubing through a suitable cable 3. The electrical connections to the tube were made with drilled and split copper blocks locked in place by clamping screws and the electrical leads were plugged into all-metal receptacles soldered to the copper blocks. A direct soldering of the electrical leads to such tubes may be an advantageous arrangement. The fixed resistors are in this example 100 $\Omega$, 10 $\Omega$ and 100 $\Omega$ respectively. The output signal is obtained at 5, 5'. The relatively thick and thin sections, fixed resistors and potentiometer from the legs of a resistance-measuring bridge, as shown in Figure 2.

Figure 2 shows an example of the principal components and electrical equipment used in tests of probes of the present type. The probe element 1 comprising a test section 1a is connected by any means suitable for the purpose of a reservoir 7, comprising a fluid to be tested. The test section 1a comprises the said relatively thick tubing section and the said relatively thin tubing section.

The reservoir 7 may for example be a 9 liter reservoir.

The said fluid is pumped to the probe element through any pump 10 suitable for the purpose.

The pump may be connected to a speed controller 9 by any suitable means. The box 2 comprises the legs of the resistance-measuring bridge. Said bridge provides a bridge signal which is fed to a lock-in amplifier 3. The lock-in amplifier 3 may be connected by any suitable means to a recorder 5. The lock-in amplifier comprises further a reference channel output which is connected by any suitable means to a potentiostat 4.

The potentiostat 4 is connected by any suitable means to both parts of the test section 1a. The Lock-in amplifier 3 may be combined with a differential pre-amplifier (not shown). Such an arrangement provides sufficient sensitivity and background rejection (through frequency and phase locking) for the low level signals encountered and also provides a stable adjustable reference frequency for the bridge exciter. The potentiostat 4 for that exciter is for example a galvanostat with a current follower. The recorder 5 is for example a strip chart recorder. The amplifier 3 and potentiostat 4 are powered from a suitable constant voltage transformer (not shown). The tests may be conducted with an operating frequency of 35 Hz.

In selecting the frequency to be used, it may be advantageous that the choice be compatible with factors such as the following:

(1) harmonics of 60 Hz be avoided;

(2) the best performance of a preamplifier in the transformer mode is usually obtained at frequencies above about 10 or 20 Hz; but,

(3) because of the skin-effect of an alternating current in an electrical conductor, it is desirable to use the lowest reasonable frequency.

In the lock-in amplifier 3 the reference channel output 30 may be set to drive the galvanostat or potentiostat 4 at 35 Hz and a maximum current capability of about 0.6 amps rms. The galvanostat output is wired in series with the tubular probe element 1 so that most of the current goes through it with only a small fraction going through the fixed light resistors.

In operating the system, the bridge is, initially, deliberately unbalanced and the phase-angle for the lock-in amplifier is for example set for the maximum angle. The bridge is then balanced by adjusting the potentiometer with the sensitivity being gradually increased to the desired level. A typical setting of 10 millivolts corresponds to a full scale sensitivity of plus or minus 1 microvolt on the panel meter, or strip-chart recorder. An appropriate time constant setting of from about 1 to 300 seconds is selected in order to eliminate excessive wander in the signal.

Experiments were conducted to determine the ability of the present type of tubular corrosion measuring conduits to model the mass transport phenomenon as it affects corrosion within a pipe-line.

A 0.02% by volume hydrochloric acid solution was pumped through the apparatus of Figure 2 at different rates of flow. The results were expressed, in terms of the average corrosion rate in $10^{-3}$ cm per year (i.e., the number of thousandths of a cm lost per year) with increases in flow rate in milliliters per second. A large stepwise reduction in corrosion rate occurred when the flow rate dropped from the turbulent region to the laminar region (the Reynolds numbers decreasing from above about 3,000 to below about 2,000). In those tests, from about 7 to 10 minutes were used at each flow rate in order to measure the corresponding corrosion rate.

In the above tests, the corrosion was caused by a single phase aqueous liquid. But, consistent results have been obtained regarding the corrosion caused by a dispersed aqueous phase contained within an innocuous continuous phase. In the latter tests, the corrosion rates measured on a disc which was rotating at various speeds demonstrated that corrosion by a dispersed phase is strongly influenced by the rotational speed. This corresponds with the general recognition that corrosion by dispersed aqueous phase depends on flow, interfacial, aqueous, electrochemcial and metallic variables. The flow variables include velocity, flow geometry and the amount of dispersed water. The interfacial variables include interfacial tension and contact angle. The metal and aqueous variables are primarily controlled by the composition of the metal and the aqueous phase fluid.

Thus, it is now apparent that inserting a probe body, or making substantially any change in the generally uniform interior of a fluid-conveying conduit, may strongly influence the amount of turbulence in that region. Because of this, the present type of probes are uniquely advantageous in measuring the corrosion rate that is occurring within a conduit while the conduit is conveying a fluid at flow conditions which substantially duplicate those which predominate throughout the conduit.

Experiments were conducted to measure the lower limit of sensitivity of a system using probes of the present type. Some of the tests used only nitrogen gas in the sensor tube, others used nitrogen-purged deionized water, and still others used a pH-adjusted deionized water. In order to achieve a "no corrosion"state, tests were made during periods ranging from 14 to 159 hours. Typical test results are listed in Table 1.

TABLE 1
Results of low corrosion rate studies

| Solution | Test length (hrs.) | Slope ($\mu v$/hr) | STD. error ($\mu v$/hr) | Calculated C.R., ($10^{-3}$ CM per year) |
|---|---|---|---|---|
| $N_2$ only | 138 | 0.00023* | — | 0.127 |
| $N_2$ purged DIW | 32 | 0.00002* | 0.00012 | 0.0127 |
| $N_2$ purged DIW | 20 | 0.00028* | 0.00015 | 0.152 |
| $N_2$ only | 63 | −0.00016* | 0.00009 | −0.102 |
| $N_2$ purged pH 8 to 10 (NaOH) distilled water | 138 | 0.0060* | — | 3.56 |
| $N_2$ only | 14 | ≤0.00011* | | ≤0.051 |
| $N_2$ only | 37 | ≤0.00037** | — | ≤0.229 |
| $N_2$ only | 87 | ≤0.00024 | — | ≤0.254 |
| $N_2$ only | 72 | ≤0.00028 | — | ≤0.305 |
| pH 10.5 DIW | 159 | 0.00019 | — | 0.203 |

DIW=Deionized water
*1.0 amp rms excitation
**17.5 Hz excitation

Regarding the data in Table 1, the actual corrosion rates were not verifiable in magnitude by weight loss since $0.254 \times 10^{-3}$ cm per year is equivalent to only 8 milligrams per hour. However, in a few cases, weight measurements did verify that slow weight loss was occurring. The indicated corrosion rates were based on the resistance readings. The indicated standard slope errors were obtained by regression analysis performed on three sets of the data. The tests indicate that, with the present type of corrosion measuring probes, measurements can be made of rates as low as about $0.254 \times 10^{-3}$ cm per year.

Laboratory tests of the type described above were also conducted on an embodiment of the present type of sensing element comprising a 1.80 m length of 11.4 cm diameter pipe. That sensing element was the 182.88 cm length of 11.4 cm outer diameter carbon steel pipe (composition including carbon 0.19%, manganese 0.59%, chromium 0.06%m molybdenum 0.05% and phosphorus 0.006%) with a nominal 0.38 cm wall thickness. A 87.6 cm subsection set in 3.81 cm from one end was machined down to half its original thickness. Three copper electrodes measuring 5 cm at the base were silver soldered to the pipe, one at the middle and one each at locations 3.81 cm in from the ends. Those electrodes provided a means for cable and wire attachments and defined the active zones of the sensing element. The sensing element was employed in conjunction with a balanced bridge resistivity measuring system, substantially as described above.

Calculations were made with respect to the effect of scaling up of the diameter and wall thicknesses on the sensitivity of the present type of corrosion measuring conduit sections. A formula was developed relating the Wheatstone bridge single change ($\Delta E$), to metal loss (x), bridge voltage (V), cross-sectional wall areas ($A_2$-thick, $A_1$-thin), and diameter (d-outside, $d_2$-inside thick, $d_1$-inside thin). Equal lengths are assumed for thin and thick sections, and do not otherwise enter into the formula; however, for a given applied current, V is greater for longer lengths, and hence the sensitivity is higher, but not as a percentage of the impressed bridge voltage. The formula is:

$$\Delta E = V \times \pi \left[ \frac{A_2 d_1 - A_1 d_2}{(A_1 + A_2)(A_1 + A_2 - \pi x(d_1 + d_2))} \right]$$

For very small x; this reduces to:

$$\Delta E = V \times \pi \left[ \frac{A_2 d_1 - A_1 d_2}{(A_1 + A_2)^2} \right]$$

The reason for assuming constant outside diameter is for the use of two pipe sections of the same nominal diameter but of different schedules, as might be done to construct the probes to be used in a field location. Required sensitivity ($\Delta E/x$) is set as a constraint to see when V is required to achieve that sensitivity. Once V is known, the lengths required for various reasonable current levels are easily calculated from conventional formulas. The device shown in Figure 1 has a sensitivity of $2 \times 10^{-5}$ volts/$2.54 \times 10^{-3}$ cm (volts per thousandth of 2.54 cm loss of metal thickness), and we can see that a sensitivity on this order would require a current of ten amps and lengths on the order of one hundred feet or more. Longer lengths are increasingly impractical, as are higher currents. In many situations, however, somewhat lower sensitivities can be tolerated due to the greater than $0.25 \times 10^{-3}$ cm per year corrosion rates expected.

The response to the metal loss of the 11.4 cm device has been calculated theoretically for constant voltage $-V$, and constant current $-i$, excitation of the bridge. Constant V operation is preferred for linearity after balancing. But, for small losses after balancing, $5 \times 10^{-3}$ cm or $8 \times 10^{-3}$ cm constant i is satisfactory and is much easier to implement due to the low bridge voltage of about 10 mv.

Metal loss subsequent to bridge balancing, and temperature variations both affect sensitivity. This effect is different from temperature-caused drift. Calculations show identical thin and thick section lengths and 2:1 wall thicknesses provide best temperature drift compensation when the bridge is balanced. A loss of $2.54 \times 10^{-3}$ cm from the present corrosion measuring pipe section leaves the response linear, but greater losses lead to rising sensitivities, as do increasing temperatures at the rate of about 1.5%/°C.

In selecting an operating frequency, it is essential to consider the skin-effect or tendency for AC current to flow at the inside and outside edges of the wall. The skin-effect ratio is the AC to DC resistance; t/d is the wall thickness to diameter ratio, and f is the frequency. For the present measuring elements, the skin-effect ratios may be determined and the AC resistance ratios of the thin and thick sections may be calculated. For example, a 2:1 resistance ratio at 5 Hz, is the same as at DC; but, the two sections have almost equal resistances (1.3:1) at 35 Hz, and at this frequency most sensitivity would be lost if the device worked at all. Actual measurements of iR drops in the two sections have been performed at several frequencies. These results agree fairly well with the estimates.

The uniformity of current flow in the present corrosion measuring pipe has been determined by making local iR drop readings around and along the pipe with a hand-held pickup using two pointed electrodes 2.54 cm (one inch) apart. The end readings indicate poor uniformity near the current supplying connections, however, the other readings show excellent distribution (better than ±7%) throughout the central two-thirds of the pipe.

The direction of signal change to be expected from corrosion can be readily determined by jumpering the thin and thick sections with test leads. Corrosion causes a faster rise in resistance of the thin section, and this can be simulated by reducing the resistance of the thick section or paralleling it with a jumper wire. The spike so obtained is in the (+) direction, and corrosion caused signal slopes should therefore have (+) polarities.

Five sets of experiments have been conducted with the above-described 11.4 cm corrosion measuring, as indicated in Table 2. The first experiment involved a long period of near zero corrosion, with the pipe sealed and full of $N_2$ gas (also, the exterior coated with a corrosion inhibiting paper). The remaining tests were each started with thirty liters of deionized water in the measuring pipe/reservoir system (always pH adjusted to $\simeq 10$ with NaOH, $N_2$ purged, and initially flowing—in all but one test). Next, hydrochloric acid was added to the water in the system and recordings were made for the time indicated. Titrations of acid samples with caustic soda were performed periodically to provide additional corrosion rate data, and these are presented in Table 2 along with polarization resistance corrosion rates, corrosometer signal slopes obtained by regression analysis, standard slope errors, and calculated sensitivites based on the titrations.

## TABLE 2
## Summary data

All solutions N₂ purged    Solution volume=30 liters
Current=8.7—9.3 AMPs    Flow=3.7 liters/minute

| Expt. no. | System | Time (hours) | Corrosion rate ($2.54 \times 10^{-3}$ cm per year) By titration | Corrosion rate ($2.54 \times 10^{-3}$ cm per year) By Pol. Res. | Average slope ($\mu$V/hour) | Standard slope error ($\mu$V/Hr.) | Sensitivity ($\mu$V/$2.54 \times 10^{-3}$ cm) based on titr. C.R. |
|---|---|---|---|---|---|---|---|
| 1 | N₂, sealed | 65 | — | — | 0.0040 | 0.0006 | — |
| 2 | Deionized water* | 94 | — | 0.6 | 0.0004 | 0.0001 | — |
|   | 0.51% HCl added | 25 | 152 | 53—190 | 0.0189 | 0.0003 | 1.07 |
| 3 | Deionized water* | 65 | — | 0.6 | 0.0005 | — | — |
|   | 0.51% HCl added | 18 | 48 | 11—24 | 0.0089 | 0.0005 | 1.70 |
|   | Expended solution | 54 | — | — | 0.0001 | 0.0001 | — |
| 4 | Deionized water*, no flow | 19 | — | — | 0.0021 | 0.0003 | — |
|   | Deionized water* | 72 | — | — | 0.0003 | 0.0001 | — |
|   | 1.0% HCl added | 4 | 85 | 140—320 | 0.034 | 0.0022 | |
|   | 0.0038% Rodine-213 added | First 7 | ~42 | 27—200 | 0.030 | — | Net=5.3 |
|   | (same) | Next 13 | ~12 | 25—95 | 0.0009 | 0.0005 | |
| 5 | Deionized water* | 17 | — | — | 0.0017 | 0.0003 | — |
|   | 1.0% HCl added | First 7 | 0 | 35—125** | −0.0005 | 0.0005 | — |
|   | (same) | Next 44 | 28 | 34—142** | 0.0036 | 0.0002 | 1.11 |

avg.=2.3 $\mu$v/$2.54 \times 10^{-3}$ cm

*pH~10
**Suspect values

As indicated in Table 2, the final corrosion rates (measured by polarization resistance) are suspect. They are probably due to material being trapped under the electrodes.

The slopes in the no-corrosion cases are all positive and range from 0.0003 to 0.004 $\mu$v/hour, although the greatest drifts occur during no-flow periods (N$_2$ sealed; and deionized water, no-flow), when temperature differences between the thin and thick sections may be significant. Some of this slow drift is due to corrosion, as corrosion cannot be completely arrested. A slope of 0.004 $\mu$v/hr is equivalent to $38 \times 10^{-3}$cm per year using the average sensitivity of 2.3 $\mu$v/$2.54 \times 10^{-3}$cm. Some of this is instrument drift, but probably does not amount to more than $5-10 \times 10^{-3}$cm per year.

In Table 2, the 0.0189 $\mu$v/hr slope given for experiment no. 2 represents a 25 hour average, but it is apparent that 3 hours would have been adequate to obtain a slope value. Experiment no. 3 illustrates a period of near zero corrosion (DIW), then high corrosion (0.051% HCl), then low corrosion again once the acid is consumed. Experiment no. 4 demonstrates the delayed onset of corrosion, apparently due to residual inhibitor left from the previous experiment. Leakage began at a seam in the top center of the pipe during experiment no. 5. In all reported tests and others less than $25.4 \times 10^{-3}$cm of metal had been removed, however, some isolated pitting and grooving led to this failure in an area which still measured 0.19 cm thick by ultrasonics.

The average sensitivity shown in Table 2 is 2.3 $\mu$v/$2.54 \times 10^{-3}$cm which is somewhat less than the 5 $\mu$v/$2.54 \times 10^{-3}$cm predicted. This discrepancy and the variation in the sensitivites may be due to errors in the titration and linear polarization corrosion rate measurements, and/or unusual resistance effects arising from non-uniform corrosion. The lower limit of sensitivity is established by the drift rate in the absence of corrosion, which has run a high as 0.004 $\mu$v/hr, or $38 \times 10^{-3}$cm per year. The approximate time required to make a measurement depends on the corrosion rate. Temperature effect on baseline stability was tested during a very slow cooling of flowing deionized water. Rapid liquid temperature changes and a slow flow rate may lead to large signal disturbances caused by imbalance of thick and thin section temperatures.

Various use situations, such as a buried pipe, are less likely to have such a temperature-induced imbalance due to the much higher flow rates and the stabilizing influence of the soil or other surroundings. Therefore, slow temperature changes have been tested to imitate an in-service pipe and measured a sensitivity of $0.026 \times 10^{-3}$cm/°C ($0.015 \times 10^{-3}$cm/°F). Large spikes accompany temperature changes of the flowing medium, but these are due to lag in equilibration of the relatively thick and thin pipe sections.

In a corrosion measuring conduit of the present type, the tube diameter, length, wall thicknesses, and current all affect the sensitivity, and the time required to perform a measurement at any given corrosion rate. Time-to-measure requirements may be carried out for variously sized measuring conduits. The 11.4 cm diameter pipe element described above was tested, as well as a 1.9 cm diameter element 91.44 cm long with 0.22 cm and 0.11 cm inch wall thicknesses, and, a 0.63 cm diameter element which was 10 cm long with 0.025 and 0.061 cm wall thickness. Tests have shown that the "zero corrosion" drift rates, which ultimately limits sensitivity, are typically 0.0002 to 0.0005 $\mu$v/hr, despite differences in currents and sensitivities.

It is assumed that in order to be measured, the corrosion rate signal change must exceed the drift rate, and further, the minimum signal change must be 0.07 $\mu$v (based on graphical analysis) in order to calculate a corrosion rate. The 1.9 cm diameter tube could be used, for example, in a heat exchanger where corrosion rates of 5 to $50 \times 10^{-3}$ cm per year are typical. It will be appreciated that tubes having any diameter suitable for the purpose may be used. Further relatively thick and thin sections of any suitable length may be used.

It will be clear to those skilled in the art that several ways of processing the obtained bridge signals are possible. For example instead of the lock-in amplifier a micro computer may be used to process the obtained bridge signals.

Embodiments other than those described are possible, the only limitation being the scope of the claims.

## Claims

1. A method of measuring the corrosion of a metallic conduit (1), which is conveying or is surrounded by a corrosive fluid, characterized by utilizing as a portion or section of the said conduit (1), a corrosion measuring conduit section (1a), in which (a) in locations contacted by said corrosive fluid, both the composition and configuration of the metal of the measuring section (1a) are substantially the same as those predominating throughout said metallic conduit (1); and, (b) the thickness of the metal in one portion of the measuring section (1a) is thin relative to that in another portion; and (c) said relatively thick and thin portions of the measuring section (1a) are connected to means for employing them as the arms of an electrical resistance measuring bridge.

2. The method of claim 1 wherein the corrosion measuring conduit section (1a) is obtained by making or modifying a section of the metallic conduit (1) and the resultant made or modified section is connected to the metallic conduit to convey or be contacted by at least some of the corrosive fluid.

3. The method of claim 1 or 2 adapted to measure the rate of corrosion within the conduit (1)

O 024 753

when the conduit is conveying the corrosive fluid by including the further steps of measuring the ratio between the resistances of the relatively thick and thin wall portions at at least two known times.

4. The method as claimed in claim 3 characterized in that the fluid-conveying conduit in which the rate of corrosion is measured is a fluid-transporting pipeline.

5. The method as claimed in claim 3 characterized in that the fluid-conveying conduit in which the rate of corrosion is measured is a component of a heat exchanger.

6. A corrosion measuring conduit section (1a) which, in use, is mechanically connected to a metallic fluid-confining conduit (1) having a corrodible wall which is in contact with a corrosive fluid, characterized in that:

the corrosion measuring conduit section (1a) has (a) in locations contacted by said corrosive fluid, both the composition and configuration of metal substantially the same as those which predominate throughout said fluid-confining conduit (1); (b) two wall portions in which the thickness of the wall in one portion is thin relative to that in another portion, said relatively thick and thin wall portions of the conduit section (1a) containing further portions which, in use, receive means for electrically connecting said wall portions as the arms of an electrical resistance measuring bridge.

7. The measuring conduit section as claimed in claim 6 characterized in that the section (1a) and said fluid-confining conduit (1) are composed of carbon steel.

8. The measuring conduit section as claimed in claims 6 or 7 characterized in that said means for electrically connecting the thick and thin wall portions as the arms of an electrical resistance measuring bridge are leads soldered directly onto those wall portions.

## Patentansprüche

1. Verfahren zur Bestimmung der Korrosion einer metallischen Leitung, in welcher ein korrosives fließfähiges Medium gefördert wird bzw. die von einem solchen umgeben ist, dadurch gekennzeichnet, daß als Teil oder Abschnitt dieser Leitung (1) ein Korrosions-Meßabschnitt (1a) vorgesehen ist, in welchem (a) an Stellen, die mit dem Medium in Berührung stehen, die Zusammensetzung und Konfiguration des Metalls in dem Meßabschnitt (1a) im wesentlichen die gleichen sind als die in dieser Leitung (1) überwiegenden, und (b) die Metallstärke in einem Teil des Meßabschnitts (1a) im Vergleich zu einem anderen Teil gering ist und (c) diese relativ dicken und dünnen Bereiche des Meßabschnitts (1a) derart miteinander verbunden sind, daß sie als Zweige einer Meßbrücke zur Bestimmung des elektrischen Widerstands dienen.

2. Verfahren nach Anspruch 1, dadurch gekennzeichnet, daß der Meßabschnitt (1a) erhalten worden ist durch Herstellung oder Modifizierung eines Abschnitts des metallischen Leiters (1) und dieser Abschnitt mit dem metallischen Leiter für den Transport oder die Berührung mit zumindest einer gewissen Menge an korrosivem fließfähigen Medium verbunden ist.

3. Verfahren nach Anspruch 1 oder 2 zur Bestimmung der Korrosionsgeschwindigkeit innerhalb der Leitung (1), wenn in dieser das korrosive fließfähige Medium gefördert wird, durch zusätzliche Bestimmung des Verhältnisses der Widerstände der relativ dicken und relativ dünnen Wandereiche an zumindest zwei bekannten Zeitpunkten.

4. Verfahren nach Anspruch 3, dadurch gekennzeichnet, daß die Leitung, in welcher die Korrosionsgeschwindigkeit bestimmt werden soll, eine ein fließfähiges Medium transportierende Pipeline ist.

5. Verfahren nach Anspruch 3, dadurch gekennzeichnet, daß die Leitung, in der die Korrosionsgeschwindigkeit bestimmt werden soll, ein Teil eines Wärmeaustauschers ist.

6. Leitungsabschnitt zur Bestimmung der Korrosion (1a), welcher (a) bei Betrieb mechanisch verbunden ist mist einer ein fließfähiges Medium enthaltenden Leitung (1) aus einer korrodierbaren Wand, die mit dem Medium in Berührung steht, dadurch gekennzeichnet, daß der Meßabschnitt (1a) hinsichtlich Zusammensetzung und Konfiguration an den Stellen, wo er mit dem korrosiven Medium in Berührung steht, im wesentlichen dem Metall entspricht, welches in der gesamten Leitung (1) überwiegt; (b) zwei Wandabschnitte vorhanden sind, von denen die Wandstärke eine Teils relativ dünn ist, gegenüber der des anderen Teils und die relativ dicken und dünnen Wandteile des Abschnitts (1a) weitere Teile enthalten, die bei Betrieb eine Anschlußmöglichkeit für die elektrische Verbindung der Wandteile als Zweige einer Meßbrücke zur elektrischen Widerstandsbestimmung aufweisen.

7. Meßabschnitt nach Anspruch 6, dadurch gekennzeichnet, daß der Meßabschnitt (1a) und die Leitung (1) aus Kohlenstoffstahl bestehen.

8. Meßabschnitt nach Anspruch 6 oder 7, dadurch gekennzeichnet, daß die Anschlußmöglichkeit der dicken und dünnen Wandbereiche als Zweige der Meßbrücke direkt auf diese Wandteile angelötete Drähte sind.

## Revendications

1. Un procédé pour mesurer la corrosion d'un tube métallique (1) qui est parcouru ou est entouré par un fluide corrosif, caractérisé en ce qu'on utilise comme portion ou section du tube (1) une section

8

**0 024 753**

de tube de mesure de la corrosion (1a), dans laquelle (a) dans les endroits subissant le contact du fluide corrosif, la composition et la configuration du mètal dans la section de mesure (1a) sont toutes deux sensiblement les mêmes que celles prédominantes dans tout le tube mètallique (1); et (b) l'épaisseur du métal dans une portion de la section de mesure (1a) est mince par rapport à celle dans une autre portion; et (c) les portions relativement épaisse et relativement mince de la section de mesure (1a) sont connectées à des moyens pour les utiliser comme les branches d'un pont de mesure de résistance électrique.

2. Un procédé selon la revendication 1, dans lequel la section de tube de mesure de corrosion (1a) est obtenue en fabriquant ou en modifiant une section du tube métallique (1) et la section fabriquée ou modifiée résultante est reliée au tube métallique pour être parcourue par au moins un peu du fluide corrosif ou être en contact avec ce fluide.

``3. Un procédé selon la revendication 1 ou 2 prévu pour mesurer la vitesse de corrosion dans le tube (1) quand le tube est parcouru par le fluide corrosif en incluant les étapes supplémentaires consistant à mesurer le rapport entre les résistances des portions de paroi relativement épaisse et mince à au moins deux instants connus.

4. Un procédé selon la revendication 3, caractérisé en ce que le tube parcouru par un fluide dans lequel on mesure la vitesse de corrosion est un pipeline de transport de fluide.

5. Un procédé selon la revendication 3, caractérisé en ce que le tube parcouru par un fluide dans lequel on mesure la vitesse de corrosion est un constituant d'un échangeur de chaleur.

6. Une section de tube pour mesure de la corrosion (1a) qui, en service, est connectée mécaniquement à un tube métallique (1) emprisonnant un fluide, ayant une paroi corrodable qui est en contact avec un fluide corrosif, caractérisée en ce que:

la section de tube pour mesure de la corrosion (1a) a (a) dans les endroits subissant le contact du fluide corrosif, une composition et une configuration du métal toutes deux sensiblement les mêmes que celles prédominantes dans tout le tube (1) emprisonant le fluide; (b) deux portions de paroi dans lesquelles l'épaisseur de la paroi dans une portion est petite par rapport à celle dans une autre portion, les portions de paroi relativement épaisse et mince, de la section de tube (1a) contenant d'autres portions qui, en service, reçoivent des moyens pour connecter ces portions de paroi en tant que branches d'un pont de mesure de résistance électrique.

7. Une section de tube de mesure selon la revendication 6, caractérisée en ce que la section (1a) et le conduit (1) emprisonnant le fluide sont composés d'acier au carbone.

8. Une section de tube de mesure selon les revendications 6 ou 7, caractérisée en ce que les moyens pour connecter électriquement les portions de paroi épaisse et mince en tant que branches d'un pont de mesure de résistance électrique sont des conducteurs soudés directement à ces portions de paroi.

9

FIG.1

FIG. 2

2